# EUROPÄISCHE PATENTSCHRIFT

(11) **EP 3 733 464 B1**
(45) Veröffentlichungstag und Bekanntmachung des Hinweises auf die Patenterteilung: **27.04.2022**
(21) Anmeldenummer: 20172347.5
(22) Anmeldetag: 30.04.2020
(51) Int. Cl.: B60S 3/06

(54) **FAHRZEUGBEHANDLUNGSANLAGE UND BETRIEBSVERFAHREN**
VEHICLE TREATMENT SYSTEM AND METHOD OF OPERATION
INSTALLATION DE TRAITEMENT DES VÉHICULES ET PROCÉDÉ DE FONCTIONNEMENT

(30) Priorität: 03.05.2019 DE 202019102497 U
(43) Veröffentlichungstag der Anmeldung: 04.11.2020
(73) Patentinhaber: Otto Christ AG, 87734 Benningen (DE)
(72) Erfinder: Christ, Markus, 87700 Memmingen (DE)
(74) Vertreter: ERNICKE Patent- und Rechtsanwälte PartmbB

(56) Entgegenhaltungen:
- EP-A2- 2 163 443
- WO-A1-2014/194943
- DE-U1-202008 000 993
- DE-U1-202013 103 562
- GB-A- 1 181 441
- US-A1- 2002 144 366

## Beschreibung

Die vorliegende Erfindung betrifft eine Fahrzeugbehandlungsanlage gemäß dem Oberbegriff des Hauptanspruchs und ein Betriebsverfahren.

Bisher bekannte Fahrzeugbehandlungsanlagen sind nicht optimal ausgebildet.

Aus DE 299 03 300 U1 ist eine Einfahrhilfe für eine Fahrzeugbehandlungsanlage bekannt. Die Fahrzeugbehandlungsanlage umfasst Sensoren, die paarweise beidseits der Einfahrspur in Abständen vor dem Portal angeordnet sind. Die Sensoren befinden sich außerhalb des Portalbewegungsbereichs und sind über am Boden befestigte Gestelle oder über eine direkte Befestigung an den Hallenwänden ortsfest in der Fahrzeugwaschanlage positioniert.

EP 2 163 443 A2 offenbart ein Waschportal, das zur Vorderseite und/oder zur Rückseite hin hängende Seitenwaschbürsten aufweist. Ferner ist an dem Portal in der Längsrichtung der Waschanlage zur Einfahrtseite hin eine Hochdruckwasser-Düseneinrichtung angeordnet. Diese ist an einem vertikalen Träger befestigt, welcher mit dem Portal mitbewegt wird.

In US 2002/0144366 A1 ist eine Waschanlage gezeigt, die einen Vorderkörper und einen davon getrennten Hinterkörper aufweist. An dem Vorderkörper sind Waschbürsten gelagert und an dem Hinterkörper sind Trocknungseinrichtungen vorgesehen. Der Vorderkörper sowie der Hinterkörper haben eine Tunnel-Bauform und sind jeweils auf Rollen gelagert und können in einem gewissen Ausmaß relativ zueinander bewegt werden. An einer zur Einfahrtseite weisenden Front des Vorderkörpers können eine rote Führungs-Anzeigeleuchte und/oder ein Fahrzeug-Höhensensor angeordnet sein, die in den Zeichnungen mit separaten Befestigungsbeschlägen dargestellt sein.

WO 2014/194943 A1 zeigt eine Portalwaschanlage, bei der in einer Seitenansicht bügelförmige Körper in einem Bereich vor einer Protalsäule gezeigt sind.

Aus GB 1 181 441 A ist eine Portalwaschanlage bekannt, die auf einer Seite des Portals eine Satz von Düsen aufweist, die über ein portalförmiges Rohr verteilt sind und von einer Öffnungsseite des Portals leicht beabstandet sind. Ein weiterer Satz von Düsen ist an einem zweiten Rohr angeordnet, das ebenfalls portalförmig ausgebildet aber innerhalb des Waschportals angeordnet ist.

Es ist Aufgabe der vorliegenden Erfindung, eine verbesserte Fahrzeugbehandlungsanlage und ein verbessertes Betriebsverfahren aufzuzeigen. Die Erfindung löst diese Aufgabe durch die kennzeichnenden Merkmale der eigenständigen Ansprüche.

Die Fahrzeugbehandlungsanlage gemäß der vorliegenden Offenbarung umfasst ein Portal mit mindestens zwei Portalsäulen und einer sich zwischen den Portalsäulen erstreckenden Traverse (Portaltraverse). An dem Portal ist mindestens ein Behandlungsaggregat für die Oberflächenbehandlung eines Fahrzeugs angeordnet. Unterhalb der Portaltraverse ist ein Behandlungsbereich angeordnet, in welchem sich das Fahrzeug zumindest zeitweise während eines Behandlungsvorgangs befindet. Während einer Fahrzeugbehandlung erfolgt eine Relativbewegung zwischen dem Portal und dem Fahrzeug, die parallel zu einer Längsrichtung des Behandlungsbereichs orientiert ist.

Die Fahrzeugbehandlungsanlage kann im Übrigen beliebig ausgebildet sein. Sie kann als eine Portalwaschanlage mit einem durch einen Fahrantrieb beweglichen Portal oder als Waschstraße ausgebildet sein. Bei einer Waschstraße kann ein Fahrzeug relativ zu einem Portal bewegt sein. Die Bewegung des Fahrzeugs kann durch Eigenantrieb (des Fahrzeugs) oder durch Fremdantrieb erfolgen. Ein Fremdantrieb kann insbesondere durch eine Schleppeinrichtung der Fahrzeugbehandlungsanlage bewirkt sein, damit sich das Fahrzeug an einem stationären oder beweglichen Portal entlang bewegt.

Die Fahrzeugbehandlungsanlage gemäß der vorliegenden Offenbarung umfasst mindestens einen leistenförmigen Träger, der zu einer Portalsäule in der Längsrichtung des Behandlungsbereichs vorgelagert angeordnet und mit der Portalsäule oder einem anderen Teil des Portals verbunden ist. Die Fahrzeugbehandlungsanlage weist ein Erkennungsmittel auf, das dazu ausgebildet ist, einen unzulässigen Kontakt zwischen einem leistenförmigen Träger und einem externen Körper zu erkennen, insbesondere durch berührungssensitive Erfassung oder durch Erkennen einer Bewegung des leistenförmigen Trägers gegenüber einer Soll-Position, wobei der leistenförmige Träger eine elastische Lagerung aufweist.

Der mindestens eine leistenförmige Träger kann eine oder mehrere Funktionsbereiche oder funktionale Komponenten aufweisen, durch die eine Fahrzeugbehandlung unterstützt wird. Der leistenförmige Träger also ein oder mehrere Prozessmittel umfassen, die vor oder während der Fahrzeugbehandlung einen Behandlungsprozessabschnitt unterstützen oder ausführen. Bevorzugt umfasst der leistenförmige Träger zumindest eine der folgenden Komponenten:
- Ein Beleuchtungsmittel, insbesondere eine sich über die Höhe des leistenförmigen Trägers erstreckende Beleuchtungsvorrichtung. Das Beleuchtungsmittel emittiert bevorzugt sichtbares Licht in der Längsrichtung des Behandlungsbereichs nach außen. Das Beleuchtungsmittel kann einen Hinweis-Prozessabschnitt unterstützen.
- Ein Anzeigemittel, insbesondere zur Darstellung von anweisenden oder unterrichtenden Informationen für einen Fahrer des zu behandelnden Fahrzeugs. Das Anzeigemittel kann einen Einfahranweisungs-Prozessabschnitt unterstützen oder ausführen.
- Ein Behandlungsaggregat, insbesondere eine oder mehrere Strahldüsen zur Oberflächenbehandlung des Fahrzeugs. Das Behandlungsaggregat kann einen Reinigungs-Prozessabschnitt, insbesondere einen Hochdruckreinigungs-Prozessabschnitt unterstützen oder ausführen.
- Ein Detektionsmittel, insbesondere ein Lichtschrankenmittel zur Aussendung oder Erfassung eines Lichtstrahls. Das Detektionsmittel kann dazu ausgebildet sein, eine lokale Präsenz bzw. das Erreichen einer Relativposition des Fahrzeugs in Relation zum Portal festzustellen. Alternativ oder zusätzlich kann ein Detektionsmittel dazu ausgebildet sein, eine zweidimensionale oder dreidimensionale Kontur des zu behandelnden Fahrzeugs zu ermitteln. Das Detektionsmittel kann einen Umfelderfassungs-Prozessabschnitt, insbesondere einen Fahrzeugkontur-Erfassungsabschnitt unterstützen oder ausführen.
- Eine Abstandssensorik zur Ermittlung einer relativen Lage des zu behandelnden Fahrzeugs gegenüber dem Portal, insbesondere in Querrichtung des Behandlungsbereichs bzw. in Querrichtung des Fahrzeugs. Das Detektionsmittel kann einen ebenfalls einen Umfelderfassungs-Prozessabschnitt, insbesondere einen Fahrzeugkontur-Erfassungsabschnitt unterstützen oder ausführen.

Die vorliegende Offenbarung umfasst weiterhin ein Betriebsverfahren für eine Fahrzeugbehandlungsanlage nach Anspruch 1, die mit mindestens einem leistenförmigen Träger ausgebildet ist, welche mindestens eines der genannten Prozessmittel umfasst, wobei das Betriebsverfahren die Schritte umfasst - Erfassen eines unzulässigen Kontakts zwischen dem mindestens einen leistenförmigen Träger und einem externen Körper durch das Erkennungsmittel, das an dem jeweiligen länglichen Träger angeordnet ist, insbesondere durch berührungssensitive Erfassung oder durch Erkennen einer Bewegung des leistenförmigen Trägers gegenüber einer Soll-Position.

Das Betriebsverfahren kann weiterhin die folgende Schritten umfassen :
- Darstellen von anweisenden oder unterrichtenden Informationen auf dem Anzeigemittel (12), das an dem länglichen Träger (10) angeordnet ist; UND/ODER
- Emittieren von Licht in der Längsrichtung des Behandlungsbereichs mit dem Beleuchtungsmittel (11), das an dem länglichen Träger (10) angeordnet ist; UND/ODER
- Detektieren einer lokalen Präsenz oder des Erreichens einer bestimmten Relativposition zwischen dem Fahrzeug und dem Portal mit dem Detektionsmittel (13, 13'), insbesondere dem Lichtschrankenmittel oder Felderfassungsmittel, das an dem länglichen Träger (10) angeordnet ist; UND/ODER
- Ermitteln einer relativen Lage des zu behandelnden Fahrzeugs gegenüber dem Portal, insbesondere in Querrichtung des Behandlungsbereichs, mit der Abstandssensorik (17), die an dem länglichen Träger (10) angeordnet ist; UND/ODER
- Erfassen eines unzulässigen Kontakts zwischen dem mindestens einen leistenförmigen Träger (10) und einem externen Körper durch das Erkennungsmittel (15), das an dem jeweiligen länglichen Träger (10) angeordnet ist, insbesondere durch berührungssensitive Erfassung oder durch Erkennen einer Bewegung des leistenförmigen Trägers (10) gegenüber einer Soll-Position.

Weitere vorteilhafte Ausbildungen der Erfindung sind in den Unteransprüchen und der nachfolgenden Beschreibung sowie den beigefügten Zeichnungen angegeben.

Die Erfindung ist in den Zeichnungen beispielhaft und schematisch dargestellt. Es zeigen:
- Figur 1:: eine Schrägbilddarstellung einer ersten Ausführungsvariante der Fahrzeugbehandlungsanlage gemäß der vorliegenden Offenbarung;
- Figur 2:: eine Draufsicht auf die Fahrzeugbehandlungsanlage gemäß Figur 1 und ein zu behandelndes Fahrzeug;
- Figur 3:: eine Detaildarstellung des leistenförmigen Trägers gemäß Ausschnitt III aus Figur 2 in einer Querschnittdarstellung;
- Figur 4:: eine Schrägbilddarstellung einer zweiten Ausführungsform der Fahrzeugbehandlungsanlage gemäß der vorliegenden Offenbarung;
- Figur 5:: eine schematische Querschnittdarstellung eines leistenförmigen Trägers mit einer elastischen Lagerung.

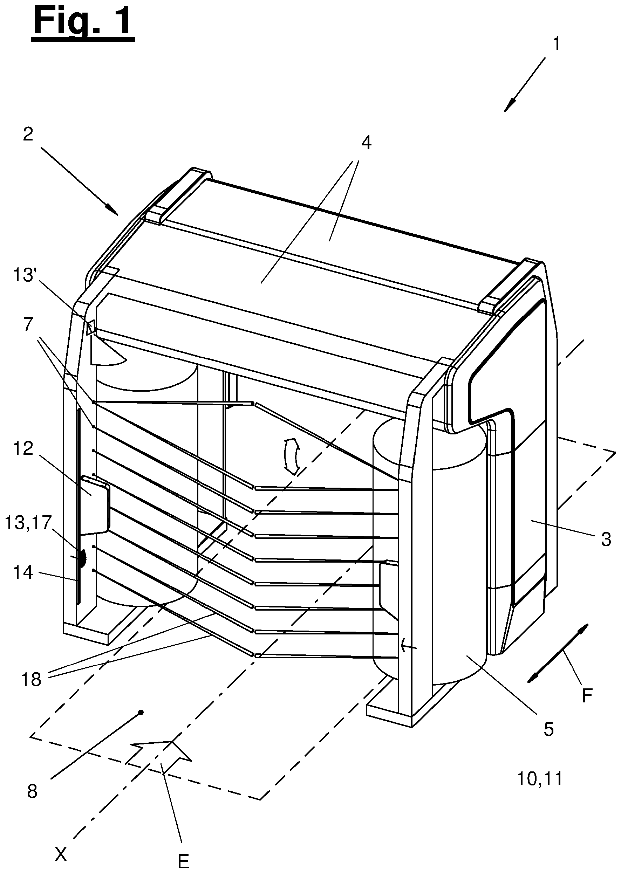

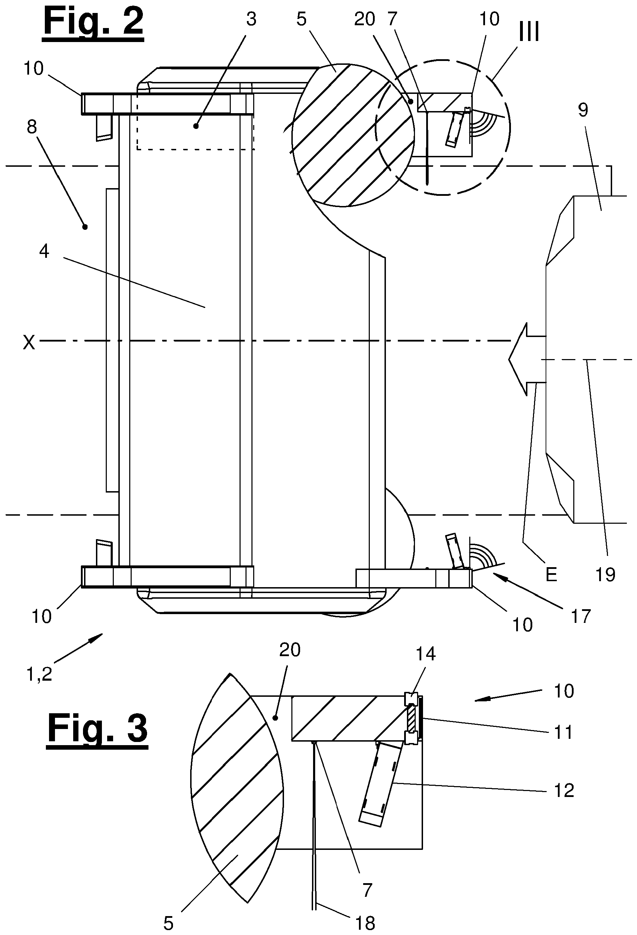

Figuren 1 und 3 zeigen bevorzugte Ausführungsvarianten einer Fahrzeugbehandlungsanlage (1) gemäß der vorliegenden Offenbarung. In den gezeigten Beispielen handelt es sich um eine Portalwaschanlage, bei der eine Relativbewegung (F) während eines Behandlungsvorgangs durch eine angetriebene Fahrbewegung des Portals (2) parallel zur Längsrichtung (X) des Behandlungsbereichs (8) erzeugt wird. Ein Fahrzeug (9) (vgl. Figur 2) wird vor oder zu Beginn des Behandlungsvorgangs im Behandlungsbereich (8) abgestellt und zum Ende oder nach dem Ende des Behandlungsvorgangs aus dem Behandlungsbereich (8) entfernt. Alle in Bezug auf die dargestellte Portalwaschanlage offenbarten Merkmale sind in entsprechender Weise bei einer Waschstraße oder einer sonstigen Form einer Fahrzeugbehandlungsanlage anwendbar. In einer Waschstraße kann das Portal ortsfest angeordnet oder in der Längsrichtung (X) bewegt sein. Das Fahrzeug (9) kann durch Eigenantrieb oder bevorzugt durch einen Fremdantrieb bewegt sein. Der Fremdantrieb kann insbesondere die Schleppeinrichtung der Waschstraße sein.

In dem Beispiel von Figur 1 sind zur Einfahrtseite (E) der Fahrzeugbehandlungsanlage (1) hin eine oder mehrere Behandlungsaggregate (5) in Form von Seitenwaschbürsten vorgesehen, die in der Längsrichtung (X) vor den Portalsäulen (3) angeordnet sind. Mit anderen Worten sind die Seitenwaschbürsten (5) auf der Einfahrtseite (E) der Fahrzeugbehandlungsanlage (1) angeordnet. Die Seitenwaschbürsten (5) können auf beliebige Weise an dem Portal (1) gelagert sein. Bevorzugt sind sie im Bereich der Portaltraverse (4) und an einer dort angeordneten Führungsschiene gelagert und geführt, so dass sie in Querrichtung des Behandlungsbereichs (8) an die Seitenflächen des zu behandelnden Fahrzeugs (9) zugestellt werden können. Alternativ oder zusätzlich zu den Seitenwaschbürsten können andere bürstenförmige Behandlungsaggregate vorhanden sein, beispielsweise eine oder mehrere Polierbürsten mit gleicher oder anderer Aufhängung.

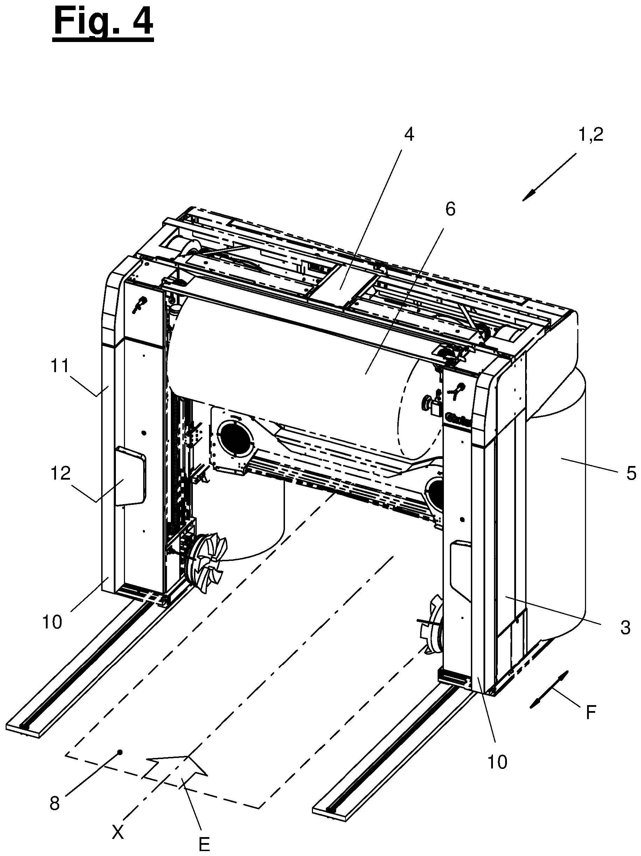

In dem Beispiel von Figur 4 ist die Anordnung der Seitenwaschbürsten (5) im Vergleich zu Figur 1 umgekehrt. D.h. hier sind die Seitenwaschbürsten (5) auf der von der Einfahrtseite (E) entfernten Seite des Portals (1) angeordnet.

Bevorzugt ist mindestens ein leistenförmiger Träger (10) an der Einfahrtseite (E) des Portals (2) angeordnet. Weiterhin weist die Fahrzeugbehandlungsanlage bevorzugt mindestens einen leistenförmigen Träger (10) zur linken Seite des Behandlungsbereichs (8)und einen weiteren leistenförmigen Träger (10) zur rechten Seite des Behandlungsbereichs (8) auf. Diese beiden leistenförmigen Träger (10) sind weiterhin bevorzugt mit jeweils gleichem Seitenabstand gegenüber einer Mittelachse (X) des Behandlungsbereichs (8) vorgesehen.Dieselbe Anordnung von je einem leistenförmigen Träger (10) zur linken und rechten Seite des Behandlungsbereichs (8) kann auch an der Ausfahrtseite (bzw. an der von der Einfahrtseite entfernten Seite) des Portals (2) vorgesehen sein.

Weiterhin ist bevorzugt an jeder Portalsäule (3) der Fahrzeugbehandlungsanlage (1) mindestens ein leistenförmiger Träger (10) angeordnet. In dem Beispiel von Figur 1 ist an jeder der Portalsäulen (3) sowohl zur Einfahrtseite (E) als auch zur Ausfahrtseite hin ein leistenförmiger Träger (10) vorgesehen.

Der eine oder die mehreren leistenförmigen Träger (10) bilden bevorzugt in der Längsrichtung (X) des Behandlungsbereichs (8) eine äußerste Kontur des Portals (2). Der oder die leistenförmigen Träger (10) werden bevorzugt zusammen mit dem Portal (2) bewegt bzw. unterliegen derselben Relativbewegung (F) gegenüber dem Fahrzeug (9) wie das Portal (2).

Besonders bevorzugt sind der oder die leistenförmigen Träger (10) im Wesentlichen fest mit dem Portal (2) und insbesondere jeweils einer Portalsäule (3) oder einem äußeren Abschnitt der Portaltraverse (4) verbunden.

Ein leistenförmiger Träger (10) hat somit an der Fahrzeugbehandlungsanlage (1) (in der Längsrichtung X) eine exponierte Position. Er kann gleichzeitig eine im Vergleich zu einer Portalsäule (3) deutlich schlankere bzw. schmalere Formgebung haben. Bevorzugt ist die Breite eines leistenförmigen Trägers (10) in Querrichtung des Behandlungsbereichs (8) deutlich geringer als die entsprechende Breite einer Portalsäule (3). Die Breite eines leistenförmigen Trägers (10) in Querrichtung des Behandlungsbereichs (8) kann insbesondere in einem Wertebereich von 4 cm bis 25 cm liegen, während eine Portalsäule beispielsweise eine Breite von 40 bis 100 cm haben kann. Die Breite des leistenförmigen Trägers kann bevorzugt weniger als 15 cm betragen.

Die Portalsäulen (3) umfassen die mechanische Tragstruktur des Portals, an dem die Gewichts- und Betätigungskräfte der verschiedenen Behandlungsaggregate abgestützt sind. An oder in den Portalsäulen (3) können weiterhin Steuerungskomponenten, Fluidführungen und diverse Antriebsmittel angeordnet sein. Die Portalsäulen (3) können eine abnehmbare oder öffenbare Verkleidung aufweisen. Der mindestens eine leistenförmige Träger (10) ist bevorzugt mit Abstand vor einer solchen Verkleidung angeordnet und nimmt nicht Teil an der mechanischen Stützwirkung für die Gewichtskräfte und Betätigungskräfte der Behandlungsaggregate, die direkt am Portal angeordnet sind. Ein leistenförmiger Träger (10) kann allerdings die Gewichts- und Betätigungskräfte eines Behandlungsaggregats (7), insbesondere einer Strahldüse, aufnehmen und abstützen, welche am leistenförmigen Träger (10) selbst angeordnet ist.

Der leistenförmige Träger (10) erstreckt sich bevorzugt über die Höhe einer Portalsäule (3) bzw. über die Höhe des Portals (2).

Die vorgenannte Anordnung und Form des mindestens eines leistenförmigen Trägers (10) bietet verschiede Vorteile.

Zum einen wird ein stabiler Aufbau für den leistenförmigen Träger erreicht, sodass an dem leistenförmigen Träger befestigte Behandlungsaggregate wie beispielsweise Strahldüsen (7), oder Prozessmittel wie Detektionsmittel (13,13'), Anzeigemittel (12), Beleuchtungsmittel (11) oder eine Abstandssensorik (17) in einer festen Relativposition zu den sonstigen Teilen des Portals (2), insbesondere relativ zu den Portalsäulen (3) und der Portaltraverse (4) anordenbar sind.

Während einer Fahrzeugbehandlung können hohe Kräfte an den Behandlungsaggregaten und den zu deren Abstützung dienenden Strukturen der Fahrzeugbehandlungsanlage (1) auftreten. Durch diese Kräfte können bei einer unzureichend steifen Abstützung Verwindungen oder sonstige Verformungen auftreten, durch die eine momentane Positionsänderung der vorgenannten Komponenten erfolgen kann. Gerade bei Messeinrichtungen, wie den hier genannten Detektionsmitteln, oder einer Abstandssensorik können schon geringe Formänderungen einen negativen Einfluss auf ein Erfassungsergebnis haben.

Die Anordnung der vorgenannten Komponenten an dem leistenförmigen Träger (10) gemäß der vorliegenden Offenbarung hat den Vorteil, dass auch während einer Fahrzeugbehandlung eine exakte Erfassung durchgeführt werden kann. Die an dem leistenförmigen Träger etwaig vorhandenen Behandlungsaggregate (7) können während der Betätigung der sonstigen Prozessmittel bevorzugt deaktiviert sein, um das Erfassungsergebnis nicht zu beeinträchtigen.

Darüber hinaus können die besagten Komponenten an dem leistenförmigen Träger (10) insbesondere an dem zum Innenbereich weisenden seitlichen Flanken des leistenförmigen Trägers (10) angeordnet werden. An dieser Stelle sind insbesondere ein Detektionsmittel (13,13'), eine Abstandssensorik (17), ein Anzeigemittel (12) und ein Beleuchtungsmittel (11) besser vor Einflüssen geschützt, die sich aus dem Betrieb der Behandlungsaggregate der Fahrzeugbehandlungsanlage (1) oder aus dem Betrieb benachbarter Anlagenteile ergeben können. Zu solchen Einflüssen gehören insbesondere Flüssigkeitsspritzer oder Nebel, starker Lichteinfall sowie Schmutzeintrag.

Die Anordnung der vorgenannten Komponenten an dem leistenförmigen Träger (10) unterstützt somit einen dauerhaften störungsfreien Betrieb. Weiterhin ist die Sichtbarkeit auf ein Beleuchtungsmittel (11) sowie ein Anzeigemittel (12) an dem leistenförmigen Träger (10) verbessert, insbesondere aus der Blickrichtung eines Fahrers, der sein Fahrzeug (9) in den Behandlungsbereich (8) einfährt, oder dessen Fahrzeug (9) sich während eines Behandlungsvorgangs in dem Behandlungsbereich (8) befindet. Die Anordnung eines Beleuchtungsmittels und/oder einer Anzeigevorrichtung an dem leistenförmigen Träger (10) ermöglicht einen sicheren und ästhetisch ansprechenden Betrieb ohne Verschmutzung oder Abdeckung der lichtimitierenden Bereiche, selbst wenn in einem Behandlungsvorgang stark schäumende Fluide, oder unter Rückstandbildung abtrocknende Stoffe wie Polituren verwendet werden.

Durch die exponierte Position ist auch ein guter Schutz vor wegspritzenden Fluiden erreichbar, wenn ein Behandlungsvorgang mit besonders hohen Drehzahlen der Seitenwaschbürsten (5) oder einer Dachbürste (6) ausgeführt wird, was insbesondere bei den immer stärker gekrümmten oder zerklüfteten Fahrzeugkonturen der heute zu behandelnden Fahrzeuge notwendig wird, damit die Borsten oder sonstigen beweglichen Teile eines Bürstenbesatzes durch Fliehkraft weit genug in Radialrichtung ausgetrieben werden und mit einer ausreichenden lokalen Kraft auf einen zu behandelnden Teil der Fahrzeugoberfläche anliegen.

Ein leistenförmiger Träger (10) kann auf beliebige Weise an dem Portal (2) und insbesondere einer Portalsäule (3) befestigt sein. Besonders bevorzugt ist der leistenförmige Träger (10) am oberen Ende über ein Verbindungsstück an einer Portalsäule (3) oder einem äußeren Bereich der Portaltraverse (4) befestigt. Das Verbindungsstück ist bevorzugt horizontal ausgerichtet.

Am unteren Ende ist der leistenförmige Träger (10) bevorzugt über ein weiteres Verbindungsstück mit dem Fußbereich einer Portalsäule (3) verbunden bzw. daran befestigt, wobei das weitere Verbindungsstück bevorzugt ebenfalls horizontal ausgerichtet ist. Zwischen dem oberen Ende und dem unteren Ende kann der leistenförmige Träger (10) sich bevorzugt frei und gegebenenfalls mit Abstand gegenüber einer Portalsäule (3) erstrecken. Mit anderen Worten hat der leistenförmige Träger (10) bevorzugt einen bügelförmigen Aufbau mit Befestigung an einer Portalsäule (3) bzw. der Portaltraverse (4) am oberen und unteren Ende. Die Befestigung erfolgt insbesondere am oberen Ende einer Portalsäule und am unteren Ende der Portalsäule, wobei die vertikale Länge des leistenförmigen Trägers (10) in etwa gleich oder größer ist als die vertikale Länge der Portalsäule (3).

Der leistenförmige Träger (10) hat in einem Mittelbereich der Höhenerstreckung bevorzugt eine solche Beabstandung gegenüber der Portalsäule (3), dass zwischen dem leistenförmigen Träger (10) und der Portalsäule ein Freiraum (20) gebildet ist. Dies ist beispielhaft in Figuren 2 und 3 dargestellt.

In dem Freiraum (20) kann beispielsweise eine Seitenwaschbürste (5) in einer inaktiven Position bzw. in einer zurückgezogenen Position aufgenommen sein.

Wenn die Seitenwaschbürste (5) zum Ende einer Behandlungsphase der Seitenflächen eines Fahrzeugs (9) oder nach Abschluss eines Behandlungsvorgangs trockengeschleudert wird, sind eine an der Front des leistenförmigen Trägers (10) angeordnete Beleuchtungsvorrichtung (11) sowie eine beispielsweise seitlich zur Innenseite abstehende Ampelanzeige oder ein Display (12) durch den leistenförmigen Träger (10) bzw. die exponierte Anordnung gut vor Wasserspritzern geschützt. Weiterhin ist auch eine Sichtbarkeit der vorgenannten lichtemittierenden Mittel während eines Behandlungsvorgangs oder während des Trockenschleuderns uneingeschränkt möglich. Hierdurch wird das ästhetische Erscheinungsbild aufgewertet und das Beleuchtungsmittel (11) und/oder das Anzeigemittel (12) können besser genutzt werden, um Informationen darzustellen oder zu vermitteln.

Der leistenförmige Träger (10) weist eine elastische Lagerung (14) auf, die an einer beliebigen Stelle angeordnet sein kann, insbesondere im Bereich der Befestigung am oberen und/oder unteren Ende des leistenförmigen Trägers (10). Durch die elastische Lagerung (14) kann zumindest ein Teil des leistenförmigen Trägers (10) beschränkt beweglich angeordnet sein.

Weiterhin kann durch die elastische Lagerung (14) eine taktile Sensorik bzw. eine berührungssensitive Erfassung eines Kontakts zwischen dem leistenförmigen Träger (10) und einem externen Körper unterstützt oder ermöglicht werden.

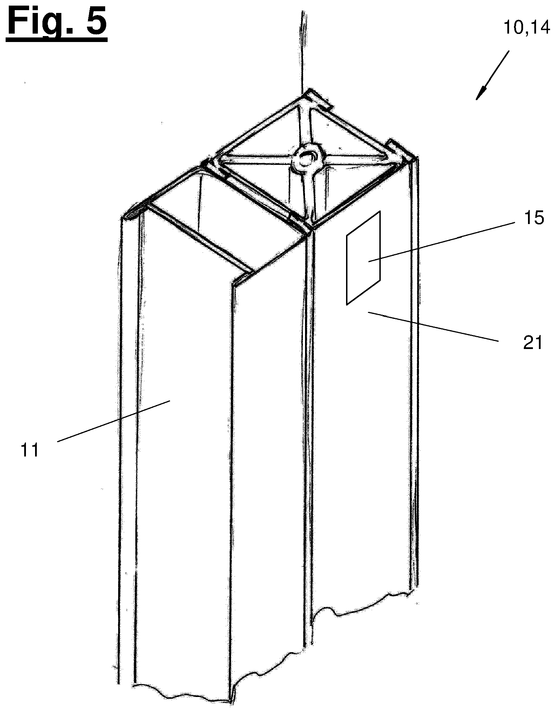

Figur 5 zeigt beispielhaft eine Querschnittdarstellung auf einen Frontabschnitt eines leistenförmigen Trägers (10). In dem hier gezeigten Beispiel ist eine in der Längsrichtung (X) des Behandlungsbereichs (8) nach außen weisende Komponente des leistenförmigen Trägers (10), hier eine Profilleiste, an oder in der zumindest ein Beleuchtungsmittel (11) aufgenommen ist, über die elastische Lagerung (14) befestigt. Die elastische Lagerung (14) weist hier beispielhaft einen profilförmigen deformierbaren Stützkörper (21) auf. Dieser kann beispielsweise durch einen Gummiträger gebildet sein. Er ermöglicht bei einem Kontakt mit einem externen Körper ein Ausweichen der elastisch gelagerten Komponente, so dass Beschädigungen an dem externen Körper oder an dem leistenförmigen Träger (10) vorgebeugt wird.

Die Fahrzeugbehandlungsanlage (1) weist ein Erkennungsmittel auf, dass dazu ausgebildet ist, eine Verformung der elastischen Lagerung (14) und/oder eine (zumindest bereichsweise) Bewegung des leistenförmigen Trägers (10) gegenüber einer Soll-Position zu erkennen. Alternativ oder zusätzlich kann das Erkennungsmittel (15) dazu ausgebildet sein, einen unzulässigen Kontakt zwischen dem leistenförmigen Träger (10) und dem externen Körper zu erkennen, insbesondere durch berührungssensitive Erfassung. Der externe Körper kann beispielsweise eine unzulässiger Weise geöffnete Fahrzeugtür, ein unzulässiger Weise im Fahrbereich des Portals abgestellter Gegenstand oder eine Person sein, die sich unzulässiger Weise in direkter Nähe zum Portal aufhält.

Das Erkennungsmittel (15) kann eine beliebige Ausbildung haben. In dem Beispiel von Figur 5 ist ein Dehnungsmesstreifen als Teil des Erkennungsmittels (15) gezeigt, welche eine Verformung des deformierbaren Stützkörpers (21) erfasst. Alternativ sind beliebige andere Erkennungsmittel nutzbar, wie beispielsweise Positions- oder Bewegungs-Erfassungsmittel.

Die Fahrzeugbehandlungsanlage (1) ist bevorzugt dazu ausgebildet, auf Basis eines Signals des Erkennungsmittels (15) eine Sicherheitsmaßnahme auszuführen. Die Ausführung einer Sicherheitsmaßnahme ist entsprechend ein Teil des offenbarungsgemäßen Betriebsverfahrens.

Die Sicherheitsmaßnahme kann eine oder mehrere Funktionen umfassen. Beispielsweise kann bei Ermittlung eines unzulässigen Kontakts an dem leistenförmigen Träger (10) eine Relativbewegung (F) zwischen dem Portal (2) und dem zu behandelnden Fahrzeug (9) begrenzt werden. Dies kann durch Abbremsen oder Stillsetzen einer Portalbewegung oder einer angetriebenen Förderbewegung des Fahrzeugs (9) geschehen. Alternativ oder zusätzlich kann eine gegenläufige Relativbewegung ausgelöst werden, mit der der Kontakt zu dem externen Objekt vermindert oder gelöst wird.

Wiederum alternativ oder zusätzlich kann im Rahmen einer Sicherheitsmaßnahme ein Behandlungsvorgang begrenzt werden, beispielsweise durch Entfernen eines oder mehrerer Behandlungsaggregate aus einer Zustellposition und/oder durch Stillsetzung der Fahrzeugbehandlungsanlage (1) .

Die Fahrzeugbehandlungsanlage (1) kann eine Fahrzeugmittenerkennung (16) aufweisen, deren Funktion in Figur 2 skizziert ist. In dem gezeigten Beispiel wird ein zu behandelndes Fahrzeug (19) in einer Einfahrrichtung (E) in den Behandlungsbereich (8) der Fahrzeugbehandlungsanlage (1) bewegt. In dem gezeigten Ausgangszustand kann dabei eine Fahrzeugmitte (19) des zu behandelnden Fahrzeugs (9) gegenüber einer Mittelachse (X) des Behandlungsbereichs (8) seitlich versetzt sein. Ein solcher seitlicher Versatz kann für das Ergebnis eines Behandlungsvorgangs nachteilig sein, weshalb dem Fahrer Anweisungsinformationen vermittelt werden, die ihn bei der zentrischen Positionierung seines Fahrzeugs (9) im Behandlungsbereich (8) unterstützen sollen. Hierzu ist es beispielsweise möglich, über ein Anzeigemittel (12), beispielsweise ein Display, den Fahrer über Richtungspfeile nach links oder rechts Hinweise zu geben, wohin er sein Fahrzeug steuern soll, damit die Fahrzeugmitte (19) besser kollinear zur Mittelachse (X) des Behandlungsbereichs (8) ausgerichtet wird.

Gemäß der vorliegenden Offenbarung wird vorgeschlagen, alternativ oder zusätzlich zu dem digitalen Informationswert einer solchen Richtungsanweisung (rechts/links/okay) eine analoge oder in einem kontinuierlichen Spektrum veränderliche Information zu vermitteln, durch die dem Fahrer vermittelt wird, wie weit bzw. wie stark eine Positionsänderung momentan erforderlich ist.

Die Fahrzeugbehandlungsanlage (1) kann hierzu eine beliebige Abstandssensorik aufweisen. Bevorzugt ist mindestens ein Abstandssensor (17) jeweils an einem leistenförmigen Träger (10) zur linken Seite und zur rechten Seite des Behandlungsbereichs (8) angeordnet. Die Abstandssensoren (17) können eine beliebige Ausbildung haben. Sie können beispielsweise Ultraschallsensoren sein, durch welche ein relativer Abstand zwischen dem jeweiligen Sensor (17) und einer nächstliegenden seitlichen Kontur des Fahrzeugs (9) erfasst wird.

Die Fahrzeugbehandlungsanlage (1) ist bevorzugt dazu ausgebildet eine analoge Anzeigeinformation oder eine in einem kontinuierlichen Spektrum veränderbare Anzeigeinformation, insbesondere einen Farbintensitätswert oder einen Helligkeitswert an dem Beleuchtungsmittel (11) und/oder an dem Anzeigemittel (12) auszugeben, wobei die analoge Anzeige Informationen in Abhängigkeit von einem momentanen Messwert der Abstandssensorik geändert wird. So kann beispielsweise auf der Seite der Fahrzeugbehandlungsanlage (1), zu der das Fahrzeug (9) eine zu starke Annäherung hat, eine intensive Information angezeigt werden, also beispielsweise eine helle und rote Färbung, während auf der anderen Seite der Fahrzeugbehandlungsanlage (1), wo eine geringe Annäherung festgestellt wird, eine schwache Anzeige erfolgt, also beispielsweise eine grüne und/oder weniger hell erstrahlende Anzeige. Diese analoge Anzeigeinformation kann zusätzlich zu einer digitalen Information wie den vorgenannten Richtungspfeilen vermittelt werden.

Wenn der Fahrer in Folge der Anzeigeinformationen die Relativlage bzw. den seitlichen Versatz zwischen dem Fahrzeug (9) und dem Behandlungsbereich (8) ändert, wird sich entsprechend das Signal der Abstandssensorik ändern, wobei bei einer Annäherung an die konzentrische Ausrichtung der Unterschied zwischen den anlogen Anzeigeinformationen zur linken und rechten Seite des Behandlungsbereichs (8) reduziert wird.

Auf diese Weise kann ein schnelleres und besser zielgerichtetes Positionieren eines Fahrzeugs (9) erreicht werden, was insbesondere zu Stoßzeiten die Auslastung einer Fahrzeugbehandlungsanlage deutlich verbessern kann. Die Durchführung der Mittenerkennung und der Fahreranweisung durch eine Anzeigeinformation stellt einen Bestandteil des offenbarungsgemäßen Betriebsverfahrens dar.

Die Abstandssensorik kann alternativ oder zusätzlich zur Verwendung der Abstandssensoren (17) mindestens ein Detektionsmittel (13,13') umfassen. In dem Beispiel von Figur 1 ist ein erstes Detektionsmittel (13) in Form einer Lichtschranke oder eines Lichtgitters vorgesehen. Die Lichtschranke (13) kann insbesondere mit einem Abstandssensor (17) integriert sein.

Weiterhin ist im oberen Bereich des leistenförmigen Trägers (10) ein Detektionsmittel (13') in Form eines Felderfassungsgeräts gezeigt. Ein solches Felderfassungsgerät kann beispielsweise ein Laserscanner, eine 3D-Kamera, ein Radar-Erfassungsgerät oder eine beliebige sonstige Einrichtung sein, durch die eine zweidimensionale oder dreidimensionale Konturerfassung des zu behandelnden Fahrzeugs (9) erfolgt.

Abwandlungen der Erfindung sind in verschiedener Weise möglich. Insbesondere können die zu den Ausführungsbeispielen gezeigten, beschrieben oder beanspruchten Merkmale in beliebiger Weise miteinander kombiniert und gegeneinander ersetzt werden.

Ein Portal (2) kann ein oder mehrfach in der Fahrzeugbehandlungsanlage (1) vorhanden sein. Ein Beleuchtungsmittel (11) und insbesondere die gezeigte leistenförmige Beleuchtungsvorrichtung, die sich bevorzugt über die Gesamthöhe des leistenförmigen Trägers (10) erstreckt, kann für beliebige Zwecke verwendet werden. Sie kann beispielsweise während einer Betriebsbereitschaft der Fahrzeugbehandlungsanlage (1) und während der Durchführung eines Behandlungsvorgangs unterschiedliche Farben und/oder Helligkeiten emittieren, so dass potentielle Nutzer der Behandlungsanlage schon von Weitem über den aktuellen Zustand informiert werden. Hier ist insbesondere eine Erstreckung des Beleuchtungsmittels über die gesamte Höhe des Portals (2) bzw. einer Portalsäule (3) vorteilhaft, weil so eine besonders gute Sichtbarkeit erreicht wird.

### BEZUGSZEICHENLISTE

- 1: Fahrzeugbehandlungsanlage
- 2: Portal
- 3: Portalsäule
- 4: Traverse
- 5: Behandlungsaggregat / Seitenwaschbürste
- 6: Behandlungsaggregat / Dachbürste
- 7: Behandlungsaggregat / Strahldüse
- 8: Behandlungsbereich
- 9: Fahrzeug
- 10: Leistenförmiger Träger
- 11: Beleuchtungsmittel
- 12: Anzeigemittel / Ampelanzeige / Display
- 13: Detektionsmittel / Lichtschranke
- 13': Detektionsmittel / Felderfassungsgerät
- 14: Elastische Lagerung
- 15: Erkennungsmittel / Taktile Sensorik
- 16: Fahrzeugmittenerkennung
- 17: Abstandssensor
- 18: Reinigungsstrahl / Wasserstrahl
- 19: Fahrzeugmitte
- 20: Freiraum
- 21: Deformierbarer Stützkörper / Gummiträger
- E: Einfahrtseite / Einfahrrichtung
- F: Fahrrichtung Portal / Orientierung der Relativbewegung von Portal und Fahrzeug
- X: Längsrichtung / Mittelachse des Behandlungsbereichs

## Patentansprüche

1. Fahrzeugbehandlungsanlage umfassend ein Portal (2) mit mindestens zwei Portalsäulen (3) und einer sich zwischen den Portalsäulen (3) erstreckenden Traverse (4), wobei an dem Portal (2) mindestens ein Behandlungsaggregat (5, 6, 7) für die Oberflächenbehandlung eines Fahrzeugs (9) angeordnet ist, das sich zumindest zeitweise in einem unterhalb der Portaltraverse angeordneten Behandlungsbereich (8) befindet, und wobei während einer Fahrzeugbehandlung eine Relativbewegung (F) zwischen dem Portal (2) und dem Fahrzeug (9) erfolgt, die parallel zu einer Längsrichtung (X) des Behandlungsbereichs (8) orientiert ist, und wobei die Fahrzeugbehandlungsanlage (1) mindestens einen leistenförmigen Träger (10) aufweist, der einer Portalsäule (3) in der Längsrichtung (X) vorgelagert angeordnet ist, wobei der leistenförmige Träger weiterhin mit der Portalsäule (3) oder einem anderen Teil des Portals (2) verbunden ist, **dadurch gekennzeichnet, dass** die Fahrzeugbehandlungsanlage ein Erkennungsmittel (15) aufweist,
- wobei das Erkennungsmittel (15) dazu ausgebildet ist, eine Verformung einer elastischen Lagerung (14) des leistenförmigen Trägers (10) zu erkennen und/oder eine Bewegung des leistenförmigen Trägers (10) gegenüber einer Soll-Position zu erkennen; UND/ODER
- wobei das Erkennungsmittel (15) dazu ausgebildet ist, einen unzulässigen Kontakt zwischen dem leistenförmigen Träger (10) und einem externen Körper zu erkennen, insbesondere durch berührungssensitive Erfassung.

2. Fahrzeugbehandlungsanlage nach Anspruch 1, wobei an jeder Portalsäule ein leistenförmiger Träger (10) angeordnet ist.

3. Fahrzeugbehandlungsanlage nach Anspruch 1 oder 2, wobei sich der leistenförmige Träger (10) über die Höhe einer Portalsäule (3) erstreckt.

4. Fahrzeugbehandlungsanlage nach einem der vorhergehenden Ansprüche, wobei
- mindestens ein leistenförmiger Träger (10) an der Einfahrtseite (E) des Portals (2) angeordnet ist; UND/ODER wobei
- mindestens ein leistenförmiger Träger (10) an der Ausfahrtseite des Portals (2) angeordnet ist.

5. Fahrzeugbehandlungsanlage nach einem der vorhergehenden Ansprüche, wobei die Fahrzeugbehandlungsanlage (1) mindestens einen leistenförmigen Träger (10) zur linken Seite des Behandlungsbereichs (8) und einen weiteren leistenförmigen Träger (10) zur rechten Seite des Behandlungsbereichs (8) aufweist, und wobei diese leistenförmigen Träger (10) mit jeweils gleichem Seitenabstand gegenüber einer Mittelachse (X) des Behandlungsbereichs (8) vorgesehen sind.

6. Fahrzeugbehandlungsanlage nach einem der vorhergehenden Ansprüche, wobei der leistenförmige Träger (10)
- am oberen Ende über ein horizontal ausgerichtetes Verbindungsstück an einer Portalsäule (3) oder an der Portaltraverse (4) befestigt ist; UND/ODER
- am unteren Ende über ein horizontal ausgerichtetes Verbindungsstück am Fußbereich einer Portalsäule (3) befestigt ist.

7. Fahrzeugbehandlungsanlage nach einem der vorhergehenden Ansprüche, wobei der leistenförmige Träger (10) in einem Mittelbereich der Höhenerstreckung derart von einer Portalsäule (3) beabstandet ist, dass zwischen dem leistenförmigen Träger (10) und der Portalsäule ein Freiraum bleibt.

8. Fahrzeugbehandlungsanlage nach einem der vorhergehenden Ansprüche, wobei der leistenförmige Träger (10) ein oder mehrere Prozessmittel umfasst, die vor oder während der Fahrzeugbehandlung einen Behandlungsprozessabschnitt unterstützen oder ausführen umfasst, insbesondere:
- Ein Beleuchtungsmittel (11), insbesondere eine sich über die Höhe des leistenförmigen Trägers (10) erstreckende Beleuchtungsvorrichtung; UND/ODER
- Ein Anzeigemittel (12), insbesondere zur Darstellung von anweisenden oder unterrichtenden Informationen für einen Fahrer des zu behandelnden Fahrzeugs; UND/ODER
- Ein Behandlungsaggregat, insbesondere eine oder mehrere Strahldüsen (7); UND/ODER
- Ein Detektionsmittel (13, 13'), insbesondere ein Lichtschrankenmittel zur Aussendung oder Erfassung eines Lichtstrahls oder ein Felderfassungsgerät zur zweidimensionalen oder dreidimensionalen Erfassung einer Fahrzeugkontur; UND/ODER
- Eine Abstandssensorik.

9. Fahrzeugbehandlungsanlage nach einem der vorhergehenden Ansprüche, wobei die Fahrzeugbehandlungsanlage (1) dazu ausgebildet ist, auf Basis eines Signals des Erkennungsmittels (15) eine Sicherheitsmaßnahme auszuführen, insbesondere eine Relativbewegung (F) zwischen dem Portal und einem Fahrzeug (9) zu begrenzen und/oder einen Behandlungsvorgang zu begrenzen.

10. Fahrzeugbehandlungsanlage nach einem der vorhergehenden Ansprüche, wobei die Fahrzeugbehandlungsanlage eine Fahrzeugmittenerkennung (16) aufweist, die insbesondere mindestens einen Abstandssensor (17) umfasst, der an einem leistenförmigen Träger (10) angeordnet ist.

11. Fahrzeugbehandlungsanlage nach einem der vorhergehenden Ansprüche, wobei die Fahrzeugbehandlungsanlage dazu ausgebildet ist, eine analoge Anzeigeinformation oder eine in einem kontinuierlichen Spektrum veränderbare Anzeigeinformation, insbesondere einen Farbintensitätswert oder einen Helligkeitswert eines Beleuchtungsmittels (11), in Abhängigkeit von einem momentanen Messwert einer Abstandssensorik zu verändern.

12. Betriebsverfahren für eine Fahrzeugbehandlungsanlage (1), wobei die Fahrzeugbehandlungsanlage (1) nach einem der Ansprüche 1 bis 11 ausgebildet ist und das Betriebsverfahren die folgenden Schritte umfasst:
- Erfassen eines unzulässigen Kontakts zwischen dem mindestens einen leistenförmigen Träger (10) und einem externen Körper durch das Erkennungsmittel (15), das an dem jeweiligen länglichen Träger (10) angeordnet ist, insbesondere durch berührungssensitive Erfassung oder durch Erkennen einer Bewegung des leistenförmigen Trägers (10) gegenüber einer Soll-Position.

13. Betriebsverfahren nach Anspruch 12, wobei die Fahrzeugbehandlungsanlage weiterhin nach Anspruch 8 ausgebildet ist und das Betriebsverfahren die folgenden Schritte umfasst:
- Darstellen von anweisenden oder unterrichtenden Informationen auf dem Anzeigemittel (12), das an dem länglichen Träger (10) angeordnet ist; UND/ODER
- Emittieren von Licht in der Längsrichtung des Behandlungsbereichs mit dem Beleuchtungsmittel (11), das an dem länglichen Träger (10) angeordnet ist; UND/ODER
- Detektieren einer lokalen Präsenz oder des Erreichens einer bestimmten Relativposition zwischen dem Fahrzeug und dem Portal mit dem Detektionsmittel (13, 13'), insbesondere dem Lichtschrankenmittel oder Felderfassungsmittel, das an dem länglichen Träger (10) angeordnet ist; UND/ODER
- Ermitteln einer relativen Lage des zu behandelnden Fahrzeugs gegenüber dem Portal, insbesondere in Querrichtung des Behandlungsbereichs, mit der Abstandssensorik (17), die an dem länglichen Träger (10) angeordnet ist.

14. Betriebsverfahren nach einem der Ansprüche 12 oder 13, weiterhin umfassend:
- Betätigen einer oder mehrerer Strahldüsen, die an dem länglichen Träger (10) angeordnet sind, zur Oberflächenreinigung des Fahrzeugs.

## Claims

1. Vehicle treatment system comprising a portal (2) with at least two portal columns (3) and a crossmember (4) extending between the portal columns (3), wherein at least one treatment unit (5, 6, 7) for the surface treatment of a vehicle (9) is arranged on the portal (2) and at least for a time is located in a treatment area (8) arranged below the portal crossmember, and wherein, during a vehicle treatment, a relative movement (F) that is oriented parallel to a longitudinal direction (X) of the treatment area (8) takes place between the portal (2) and the vehicle (9), and wherein the vehicle treatment system (1) has at least one strip-like support (10), which is arranged ahead of a portal column (3) in the longitudinal direction (X), wherein the strip-like support is also connected to the portal column (3) or another part of the portal (2), **characterized in that** the vehicle treatment system has a detection means (15),
- wherein the detection means (15) is designed to detect a deformation of an elastic mounting (14) of the strip-like support (10) and/or to detect a movement of the strip-like support (10) with respect to a setpoint position; AND/OR
- wherein the detection means (15) is designed to detect inadmissible contact between the strip-like support (10) and an external body, in particular by touch-sensitive detection.

2. Vehicle treatment system according to Claim 1, wherein a strip-like support (10) is arranged on each portal column.

3. Vehicle treatment system according to Claim 1 or 2, wherein the strip-like support (10) extends over the height of a portal column (3).

4. Vehicle treatment system according to one of the preceding claims, wherein
- at least one strip-like support (10) is arranged on the entry side (E) of the portal (2); AND/OR wherein
- at least one strip-like support (10) is arranged on the exit side of the portal (2).

5. Vehicle treatment system according to one of the preceding claims, wherein the vehicle treatment system (1) has at least one strip-like support (10) to the left side of the treatment area (8) and a further strip-like support (10) to the right side of the treatment area (8), and wherein these strip-like supports (10) are provided at the same lateral distance in each case from a centre axis (X) of the treatment area (8).

6. Vehicle treatment system according to one of the preceding claims, wherein the strip-like support (10)
- is fastened at the upper end by way of a horizontally aligned connection piece on a portal column (3) or on the portal crossmember (4); AND/OR
- is fastened at the lower end by way of a horizontally aligned connection piece on the bottom region of a portal column (3).

7. Vehicle treatment system according to one of the preceding claims, wherein, in a region midway along the vertical extent, the strip-like support (10) is disposed at a distance from a portal column (3) in such a way that a clearance remains between the strip-like support (10) and the portal column.

8. Vehicle treatment system according to one of the preceding claims, wherein the strip-like support (10) comprises one or more process means, which assist or perform a phase of the treatment process before or during the vehicle treatment, in particular:
- a lighting means (11), in particular a lighting device extending over the height of the strip-like support (10); AND/OR
- a display means (12), in particular for showing directional or instructional information for a driver of the vehicle to be treated; AND/OR
- a treatment unit, in particular one or more jet nozzles (7); AND/OR
- a detection means (13, 13'), in particular a light barrier means for the emission or detection of a light beam or a field detection device for the two-dimensional or three-dimensional detection of a vehicle contour; AND/OR
- a distance sensor system.

9. Vehicle treatment system according to one of the preceding claims, wherein the vehicle treatment system (1) is designed to perform a safety measure on the basis of a signal of the detection means (15), in particular to limit a relative movement (F) between the portal and a vehicle (9) and/or to limit a treatment operation.

10. Vehicle treatment system according to one of the preceding claims, wherein the vehicle treatment system has a vehicle centre detection (16), which comprises in particular at least one distance sensor (17), which is arranged on a strip-like support (10).

11. Vehicle treatment system according to one of the preceding claims, wherein the vehicle treatment system is designed to change analogue display information or display information that is variable in a continuous spectrum, in particular a colour intensity value or a brightness value of a lighting means (11), in dependence on a momentary measured value of a distance sensor system.

12. Operating method for a vehicle treatment system (1), wherein the vehicle treatment system (1) is designed according to one of Claims 1 to 11 and the operating method comprises the following steps:
- detecting inadmissible contact between the at least one strip-like support (10) and an external body by the detection means (15), which is arranged on the respective elongated support (10), in particular by touch-sensitive detection or by detecting a movement of the strip-like support (10) with respect to a setpoint position.

13. Operating method according to Claim 12, wherein the vehicle treatment system is also designed according to Claim 8 and the operating method comprises the following steps:
- showing directional or instructional information on the display means (12), which is arranged on the elongated support (10); AND/OR
- ascertaining light in the longitudinal direction of the treatment area by the lighting means (11), which is arranged on the elongated support (10); AND/OR
- detecting a local presence or the reaching of a specific relative position between the vehicle and the portal by the detection means (13, 13'), in particular the light barrier means or field detection means, which is arranged on the elongated support (10); AND/OR
- ascertaining a relative position of the vehicle to be treated with respect to the portal, in particular in the transverse direction of the treatment area, by the distance sensor system (17), which is arranged on the elongated support (10).

14. Operating method according to one of Claims 12 or 13, also comprising:
- actuating one or more jet nozzles, which are arranged on the elongated support (10), for the surface cleaning of the vehicle.

## Revendications

1. Installation de traitement de véhicule, comprenant un portique (2) pourvu d'au moins deux colonnes de portique (3) et d'une traverse (4) s'étendant entre les colonnes de portique (3), au moins une unité de traitement (5, 6, 7) étant disposée sur le portique (2) pour le traitement de surface d'un véhicule (9) qui se trouve au moins temporairement dans une zone de traitement (8) disposée au-dessous de la traverse de portique, et dans laquelle, pendant un traitement de véhicule, un mouvement relatif (F) entre le portique (2) et le véhicule (9) est effectué qui est orienté en parallèle à une direction longitudinale (X) de la zone de traitement (8), et l'installation de traitement de véhicule (1) présentant au moins un support en forme de barre (10) qui est disposé devant une colonne de portique (3) dans la direction longitudinale (X), le support en forme de barre étant en outre relié à la colonne de portique (3) ou à une autre partie du portique (2),
**caractérisée en ce que** l'installation de traitement de véhicule présente un moyen de reconnaissance (15),
- le moyen de reconnaissance (15) étant réalisé pour reconnaître une déformation d'un logement élastique (14) du support en forme de barre (10) et/ou pour reconnaître un mouvement du support en forme de barre (10) par rapport à une position théorique ; et/ou
- le moyen de reconnaissance (15) étant réalisé pour reconnaître un contact inadmissible entre le support en forme de barre (10) et un corps externe, en particulier par détection tactile.

2. Installation de traitement de véhicule selon la revendication 1, dans laquelle un support en forme de barre (10) est disposé à chaque colonne de portique.

3. Installation de traitement de véhicule selon la revendication 1 ou 2, dans laquelle le support en forme de barre (10) s'étend sur la hauteur d'une colonne de portique (3).

4. Installation de traitement de véhicule selon l'une quelconque des revendications précédentes, dans laquelle
- au moins un support en forme de barre (10) est disposé sur le côté entrée (E) du portique (2) ; et/ou dans laquelle
- au moins un support en forme de barre (10) est disposé sur le côté sortie du portique (2).

5. Installation de traitement de véhicule selon l'une quelconque des revendications précédentes, dans laquelle l'installation de traitement de véhicule (1) présente au moins un support en forme de barre (10) sur le côté gauche de la zone de traitement (8) et un autre support en forme de barre (10) sur le côté droit de la zone de traitement (8), et ces supports en forme de barre (10) étant respectivement pourvus de la même distance latérale par rapport à une ligne médiane (X) de la zone de traitement (8).

6. Installation de traitement de véhicule selon l'une quelconque des revendications précédentes, dans laquelle le support en forme de barre (10)
- est fixé à l'extrémité supérieure par une pièce de liaison alignée horizontalement à une colonne de portique (3) ou à la traverse de portique (4) ; et/ou
- est fixé à l'extrémité inférieure par une pièce de liaison alignée horizontalement à la zone de pied d'une colonne de portique (3).

7. Installation de traitement de véhicule selon l'une quelconque des revendications précédentes, dans laquelle le support en forme de barre (10) est espacé dans une zone centrale de la dimension de hauteur par rapport à une colonne de portique (3) de telle sorte qu'il reste un espace libre entre le support en forme de barre (10) et la colonne de portique.

8. Installation de traitement de véhicule selon l'une quelconque des revendications précédentes, dans laquelle le support en forme de barre (10) comprend un ou plusieurs moyens de processus qui assistent une partie de processus de traitement avant ou pendant le traitement de véhicule, en particulier :
- un moyen d'éclairage (11), en particulier un dispositif d'éclairage s'étendant sur la hauteur du support en forme de barre (10) ; et/ou
- un moyen d'affichage (12), en particulier pour représenter des informations indicatives ou instructives pour un conducteur du véhicule à traiter ; et/ou
- une unité de traitement, en particulier une ou plusieurs buses de projection (7) ; et/ou
- un moyen de détection (13, 13'), en particulier un moyen formant barrière lumineuse pour l'émission ou la détection d'un faisceau lumineux, ou un appareil de détection de champ pour la détection bidimensionnelle ou tridimensionnelle d'un contour de véhicule ; et/ou
- un système de capteurs de distance.

9. Installation de traitement de véhicule selon l'une quelconque des revendications précédentes, dans laquelle l'installation de traitement de véhicule (1) est réalisée pour prendre une mesure de sécurité sur la base d'un signal du moyen de reconnaissance (15), en particulier pour limiter un mouvement relatif (F) entre le portique et un véhicule (9) et/ou pour limiter un processus de traitement.

10. Installation de traitement de véhicule selon l'une quelconque des revendications précédentes, dans laquelle l'installation de traitement de véhicule présente un dispositif de reconnaissance de centre de véhicule (16) qui comprend en particulier au moins un capteur de distance (17) qui est disposé sur un support en forme de barre (10).

11. Installation de traitement de véhicule selon l'une quelconque des revendications précédentes, dans laquelle l'installation de traitement de véhicule est réalisée pour modifier une information d'affichage analogique ou une information d'affichage variable dans un spectre continu, en particulier une valeur d'intensité de couleur ou une valeur de luminosité d'un moyen d'éclairage (11), en fonction d'une valeur mesurée instantanée d'un système de capteurs de distance.

12. Procédé d'exploitation destiné à une installation de traitement de véhicule (1), l'installation de traitement de véhicule (1) étant réalisée selon l'une quelconque des revendications 1 à 11, et le procédé d'exploitation comprenant les étapes suivantes consistant à :
- détecter un contact inadmissible entre ledit au moins un support en forme de barre (10) et un corps externe par le moyen de reconnaissance (15) qui est disposé sur le support longitudinal respectif (10), en particulier par détection tactile ou par la reconnaissance d'un mouvement du support en forme de barres (10) par rapport à une position théorique.

13. Procédé d'exploitation selon la revendication 12, l'installation de traitement de véhicule étant en outre réalisée selon la revendication 8 et le procédé d'exploitation comprend les étapes suivantes consistant à :
- représenter des informations indicatives ou instructives sur le moyen d'affichage (12) qui est disposé sur le support allongé (10) ; et/ou
- émettre de la lumière dans la direction longitudinale de la zone de traitement par le moyen d'éclairage (11) qui est disposé sur le support allongé (10) ; et/ou
- détecter une présence locale ou l'arrivée à une position relative déterminée entre le véhicule et le portique par le moyen de détection (13, 13'), en particulier le moyen formant barrière lumineuse ou le moyen de détection de champ qui est disposé sur le support allongé (10) ; et/ou
- déterminer une position relative du véhicule à traiter par rapport au portique, en particulier dans la direction transversale de la zone de traitement, par le système de capteurs de distance (17) qui est disposé sur le support allongé (10).

14. Procédé d'exploitation selon l'une quelconque des revendications précédentes 12 ou 13, comprenant en outre l'étape consistant à :
- actionner une ou plusieurs buses de projection qui est/sont disposée(s) sur le support allongé (10) pour le nettoyage de surface du véhicule.
